Europäisches Patentamt

European Patent Office

Office européen des brevets

(19)

(11) Veröffentlichungsnummer: **0 037 896**
B1

(12)

# EUROPÄISCHE PATENTSCHRIFT

(45) Veröffentlichungstag der Patentschrift:
06.02.85

(51) Int. Cl.⁴: **H 02 B 1/04**

(21) Anmeldenummer: **81101523.9**

(22) Anmeldetag: **04.03.81**

(54) Schalttafeleinbaugerät zur Einlochmontage in Schalttafeln.

(30) Priorität: **15.04.80 DE 3014368**

(43) Veröffentlichungstag der Anmeldung:
**21.10.81 Patentblatt 81/42**

(45) Bekanntmachung des Hinweises auf die Patenterteilung:
**06.02.85 Patentblatt 85/6**

(84) Benannte Vertragsstaaten:
**FR GB IT**

(56) Entgegenhaltungen:
**DE - A - 2 303 231**
**DE - A - 2 701 046**
**DE - A - 2 816 450**

(73) Patentinhaber: **R. Stahl Schaltgeräte GmbH,**
**Bergstrasse 2, D-7118 Künzelsau (DE)**

(72) Erfinder: **Würz, Helmut, Criesbacherstrasse 13/1,**
**D-7119 Niedernhall (DE)**

(74) Vertreter: **Patentanwälte Dipl.-Ing. W. Scherrmann**
**Dr.-Ing. R. Rüger, Webergasse 3 Postfach 348,**
**D-7300 Esslingen (Neckar) (DE)**

## Beschreibung

Die Erfindung betrifft ein Schalttafeleinbaugerät zur Einlochmontage in Schalttafeln, insbesondere für explosionsgeschützte elektrische Betriebsmittel, mit einem elektrische Schalt- oder Anzeigeeinrichtungen aufnehmenden Gehäuse, das an seinem der Rückseite der Schalttafel zugewandten Ende ein Aussengewinde mit einer darauf sitzenden Überwurfmutter sowie einer Rasteinrichtung auf seiner Aussenfläche aufweist, mit einem mit dem Gehäuse verbindbaren Rastglied, an dessen der Vorderseite der Schalttafel zugewandter Stirnseite mehrere sich im wesentlichen in axialer Richtung erstreckende, auf einem Kreis angeordnete Fortsätze hervorstehen, die im montierten Zustand durch ein Loch in der Schalttafel hindurchragen und auf ihrer Innenseite an ihrem der Stirnseite abgewandten Ende eine Rasteinrichtung tragen, die mit der entsprechend ausgebildeten Rasteinrichtung auf der Aussenseite des Gehäuses zusammenpasst, wobei im montierten Zustand das Gehäuse von den freien Enden der Fortsätze her bis zum Einschnappen der Rasteinrichtungen zwischen die Fortsätze eingeführt ist und die die Fortsätze übergreifende und die Rasteinrichtungen sichernde Überwurfmutter gegen die Rückseite der Schalttafel festgeschraubt ist.

Ein derartiges Schalttafeleinbaugerät ist aus der DE-A-2 701 046 bekannt. Jedoch kann dieses Schalttafeleinbaugerät nur bei kleinen Schalttafelabmessungen von einem einzigen Monteur installiert werden. Bei grossen Abmessungen der Schalttafel sind zwei Monteure erforderlich, nämlich einer, der das Rastglied bzw. den Abdeckrahmen von vorne gegen die Schalttafel hält, während der andere Monteur das Gehäuse zwischen die an der Rückseite der Schalttafel hervorstehenden Fortsätze des Rastgliedes schiebt. Ohne den das Rastglied haltenden Monteur würde das Rastglied nämlich sonst beim Versuch, das Gehäuse zwischen die Fortsätze zu schieben, nach vorne aus der Schalttafel herausfallen.

Aufgabe der Erfindung ist es deshalb, ein Schalttafeleinbaugerät zu schaffen, das auch bei ausgedehnten Schalttafeln leicht von einem einzelnen Monteur in die Schalttafel eingesetzt und befestigt werden kann.

Zur Lösung dieser Aufgabe ist das eingangs genannte Schalttafeleinbaugerät erfindungsgemäss mit den Merkmalen des kennzeichnenden Teiles des Hauptanspruches ausgestattet.

Dadurch, dass die Fortsätze des Rastgliedes im montierten Zustand durch die Schalttafel hindurchragen und auf ihrer Aussenfläche eine in Umfangsrichtung verlaufende Rippe mit sägezahnförmigem Querschnittsprofil aufweisen, dessen steile Kante der Schalttafel zugekehrt ist, ist ein leichtes Einführen des Rastgliedes in die Schalttafel möglich, ohne dass die Gefahr besteht, dass das Rastglied beim Einführen des Gehäuses und Einschnappen der Rastverbindung zwischen Gehäuse und Rastglied wieder nach vorne aus dem Loch der Schalttafel herausgeschoben wird. Die mit der steilen Kante der Schalttafel zugewandten Rippen auf den Fortsätzen legen sich nämlich beim Einschieben des Gehäuses zwischen die Fortsätze an der Rückseite der Schalttafel an und halten das Rastglied entgegen der durch das Gehäuse beim Einschieben aufgebrachten Kraft in der Schalttafel fest. Die steile Kante verhindert dabei, dass durch die in Richtung der Fortsätze wirkende Kraft die Fortsätze wieder zusammengebogen werden und eventuell aus dem Loch der Schalttafel freikommen.

Eine sehr einfache und staubdichte Verbindung zwischen dem Rastglied und dem Gehäuse ergibt sich, wenn die Innenflächen der Fortsätze auf einem Zylindermantel liegen und das Gehäuse im Bereich der Fortsätze eine zylindrische Gestalt mit in axialer Richtung verlaufenden Führungsleisten aufweist, die in die Lücken zwischen den Fortsätzen passen.

Eine sehr leicht herzustellende Rasteinrichtung für die Verbindung für die Verbindung der Fortsätze mit dem Gehäuse besteht in einer längs dem Umfang verlaufenden Nut in den Fortsätzen, in die ein längs dem Umfang verlaufender, auf dem Gehäuse angeordneter Wulst einrastbar ist.

Wenn die Überwurfmutter in einem vorderen Bereich einen gewindelosen Abschnitt aufweist, dessen Innendurchmesser gleich dem Aussendurchmesser der Fortsätze im Bereich der Rasteinrichtung entspricht, ist sichergestellt, dass nicht etwa durch das Festziehen der Überwurfmutter ihr Gewinde von den Fortsätzen beschädigt werden kann, die an sich durch das Festziehen aus der Raststellung herausgedrückt werden würden. Ausserdem ist hierdurch ein Ausrasten der Rastverbindung verhindert.

Je nach dem Betriebsmittel, das in dem Schalttafeleinbaugerät vorgesehen ist, kann das Rastglied eine Verdrehsicherung tragen, die in zweckmässiger Weise durch eine auf dem Fortsatz angeordnete und sich in axialer Richtung erstreckende Leiste gebildet ist.

Wenn die Abstände der Fortsätze untereinander jeweils gleich sind, ist das Gehäuse in unterschiedlichen Stellungen in das Rastglied einschiebbar. Wenn jedoch einer der Abstände zwischen zwei benachbarten Fortsätzen eine andere Breite aufweist als die übrigen Abstände und die Breite einer der Führungsleisten des Gehäuses daran angepasst ist, wird bei der Montage eine spezielle Lagezuordnung zwischen Gehäuse und Rastglied erzwungen.

Wenn das Rastglied ein Innengewinde trägt, in das eine Abdeckhaube einschraubbar ist, können ohne Demontage des Schalttafeleinbaugerätes Teile der elektrischen Betriebsmittel, beispielsweise Anzeigelampen, von vorne her ausgetauscht werden, wobei durch die Abdeckhaube von der Vorderseite der Schalttafel her und durch die Überwurfmutter von der Rückseite der Schalttafel her die Schutzart IP 54 für das Schalttafeleinbaugerät erhalten bleibt. Auch ist es möglich, in dem Rastglied ein Betätigungsorgan für das elektrische Betriebsmittel zu lagern.

In der Zeichnung ist ein Ausführungsbeispiel des Gegenstandes der Erfindung dargestellt. Es zeigen:

Fig. 1 ein Schalttafeleinbaugerät gemäss der Erfindung, das in einem Loch der Schalttafel montiert ist, in einem Längsschnitt,

Fig. 2 das Schalttafeleinbaugerät nach Fig. 1 bei der Montage in einem Loch einer Schalttafel in perspektivischer Darstellung und

Fig. 3 ein Schalttafeleinbaugerät gemäss der Erfindung, das in einem Loch der Schalttafel montiert ist und in dem ein Betätigungsorgan gelagert ist, in einem Längsschnitt.

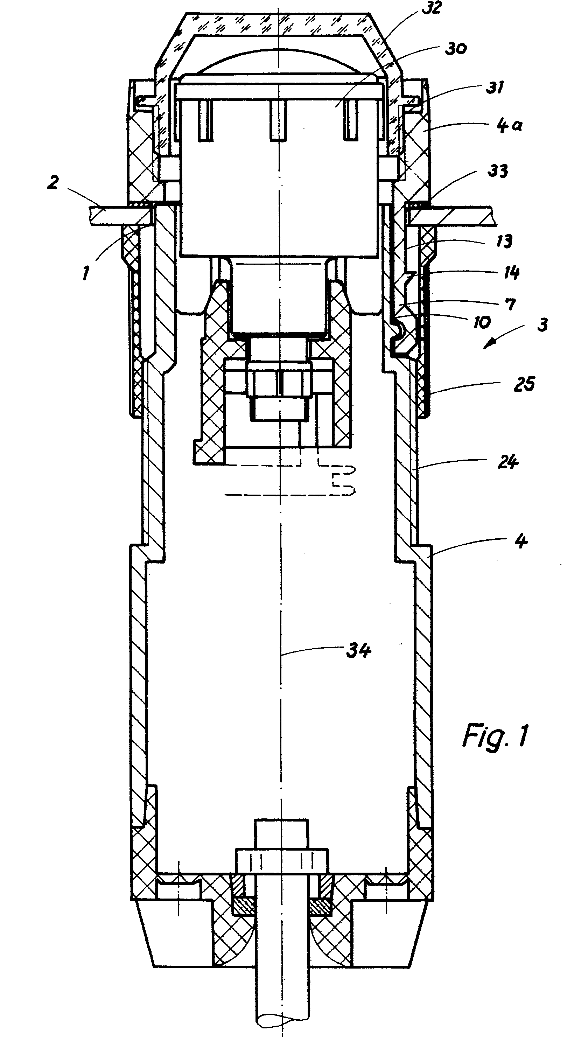

In Fig. 1 ist ein in einem Loch 1 einer ausschnittsweise veranschaulichten Schalttafel 2 montiertes Schalttafeleinbaugerät 3 dargestellt, das ein Gehäuse 4 sowie ein Rastglied 4a enthält.

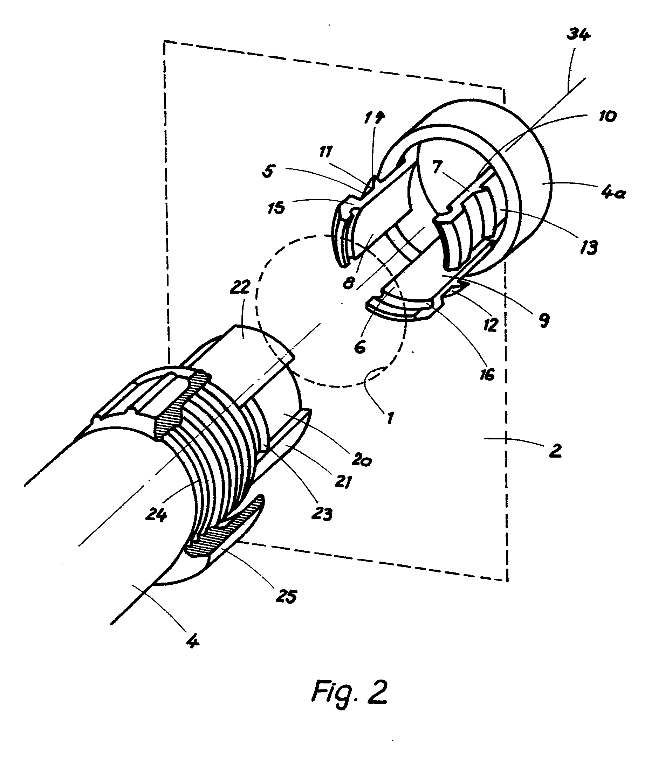

Das Rastglied 4a ist, wie Fig. 2 zeigt, ein im wesentlichen hohlzylindrischer Körper, an dessen Stirnseite, die der in Fig. 2 gestrichelt dargestellten Schalttafel 2 gegenüberliegt, drei sich in axialer Richtung erstreckende Fortsätze 5, 6 und 7 angeformt sind. Sowohl die nach innen weisenden Innenflächen 8, 9, 10 der Fortsätze 5, 6 und 7 als auch ihre nach aussen weisenden Aussenflächen 11, 12 und 13 sind zylinderförmig gekrümmt, wobei die Achsen der beiden Krümmungszylinder mit der Mittelachse 34 des Schalttafeleinbaugerätes 3 zusammenfallen. Der Durchmesser des den Aussenflächen 11, 12 und 13 zugeordneten Zylinders entspricht etwa dem Durchmesser des Loches 1 in der Schalttafel 2.

Im Abstand zu der Stirnseite des hohlzylindrischen Abschnitts des Rastgliedes 4a verläuft auf den Aussenflächen 11, 12 und 13 in Umfangsrichtung eine sägezahnförmige Rippe 14, deren steile Flanke, wie aus Fig. 1 ersichtlich, im montierten Zustand der rückwärtigen Seite der Schalttafel 2 zugekehrt und deren sanft oder schräg ansteigende Flanke der Schalttafel 2 abgekehrt ist.

An seinem freien Ende trägt jeder Fortsatz 5, 6 und 7 einen ebenfalls in Umfangsrichtung verlaufenden Wulst 15, der im Abstand zu der Rippe 14 angeordnet ist und in dessen Innenseite eine halbkreisförmige, ebenfalls in Umfangsrichtung verlaufende Nut 16 eingeformt ist.

Das Gehäuse 4 weist an seinem vorderen Ende einen etwa zylinderförmigen Abschnitt 20 auf, auf dessen Aussenfläche drei erhabene, sich in axialer Richtung erstreckende Führungsleisten 21, 22 ausgebildet sind (die dritte Führungsleiste ist aus Darstellungsgründen nicht sichtbar). Die Breite der Führungsleisten 21, 22 entspricht der Breite des Abstandes zwischen den Fortsätzen 5, 6 und 7. Die Höhe der Führungsleisten 21, 22 ist so bemessen, dass der zylindrische Abschnitt 20 ohne weiteres durch das Loch 1 der Schalttafel 2 passt. Im hinteren Bereich des zylindrischen Abschnitts 20 verläuft in Umfangsrichtung, in den Lücken zwischen den drei Führungsleisten 21, 22 ein Wulst 23, dessen Querschnittsprofil etwa dem Querschnittsprofil der Nut 16 in den Fortsätzen 5, 6 und 7 entspricht und der zusammen mit der Nut 16 eine Rasteinrichtung bildet.

Im Anschluss an den zylindrischen Abschnitt 20 trägt das Gehäuse 4 ein Aussengewinde 24, auf dem eine Überwurfmutter 25 sitzt, in deren hinteren Abschnitt ein Gewinde ausgebildet ist und deren vorderer Abschnitt innen zylindrisch glatt ist. Der Innendurchmesser des zylindrisch glatten Abschnittes ist geringfügig grösser als der durch den umlaufenden Wulst 15 und die sägezahnförmige Rippe 14 festgelegte Aussendurchmesser, wobei sich sowohl der Wulst 15 als auch die Rippe 14 etwa um den gleichen Betrag über die Aussenflächen 11, 12, 13 der Fortsätze 5, 6 und 7 erheben.

Zur Montage des Schalttafeleinbaugerätes 3 werden zunächst von der Vorderseite der Schalttafel 2 her die Fortsätze 5, 6 und 7 des Rastgliedes 4a in das entsprechende Loch 1 der Schalttafel 2 eingeführt. Da der Durchmesser des Lochs 1 kleiner als der Aussendurchmesser des Wulstes 15 und der sägezahnförmigen Rippe 14 ist, werden die Fortsätze beim Durchstecken durch das Loch 1 federelastisch wo weit nach innen gebogen, dass diese erhabenen Stellen der Fortsätze 5, 6 und 7 durch das Loch 1 hindurchrutschen können. Das Einführen wird durch eine entsprechende Fase an dem Wulst 15 bzw. die sanft oder schräg ansteigende Flanke der Rippe 14 erleichtert. Sobald die Rippe 14 durch das Loch 1 hindurchgetreten ist, nehmen die Fortsätze 5, 6 und 7 wieder ihre ursprüngliche Lage ein.

Anschliessend wird von der Rückseite der Schalttafel 2 her das Gehäuse 4 des Schalttafeleinbaugerätes 3 mit dem zylindrischen Abschnitt 20 voraus zwischen die Fortsätze 5, 6 und 7 des Rastgliedes 4a geschoben, wobei die Führungsleisten 21, 22 in die Lücken zwischen den Fortsätzen 5, 6 und 7 eingeführt werden. Ein Herausfallen des Rastgliedes 4a aus dem Loch 1 der Schalttafel 2 wird durch die sägezahnförmige Rippe 14 verhindert, deren steile Flanke sich beim Einschnappen der Rastverbindung aus der Nut 16 und dem Wulst 23 gegen die Rückseite der Schalttafel 2 anlegt.

Selbst wenn das Loch 1 der Schalttafel 2 eine unzweckmässige Fase aufweist, die zusammen mit der Rippe 14 an sich ein Eindrücken der Fortsätze 5, 6 und 7 bewirken würde, wird dies durch den zylinderförmigen Abschnitt 20 des Gehäuses 4 verhindert, der sich bereits beim Anstossen des Wulstes 23 an den Wulst 15 im Bereich der sägezahnförmigen Rippe 14 befindet. Es ist somit sichergestellt, dass das Rastglied 4a auch bei der erheblichen zum Einschnappen der Rastverbindung zwischen dem Wulst 23 und der Nut 16 erforderlichen Kraft nicht nach vorne aus dem Loch 1 der Schalttafel 2 herausgedrückt werden kann.

Nach dem Einrasten dieser Rastverbindung wird die auf dem Aussengewinde 24 sitzende Überwurfmutter 25 von hinten gegen die Schalttafel 2 geschraubt, so dass nunmehr die Schalttafel 2 zwischen dem Rastglied 4a und der Überwurfmutter 25 eingeklemmt ist, wobei die Kraftübertragung zwischen dem Rastglied 4a und dem Gehäuse 4 über den Wulst 23 und die Nut 16 geht. Ein Ausrasten dieser Rastverbindung ist jedoch durch die Überwurfmutter 25 verhindert, die ein Aufbiegen der Fortsätze 5, 6 und 7 und somit ein Ausrasten blockiert.

Zur Demontage des Schalttafeleinbaugerätes 3 wird zunächst die Überwurfmutter 25 soweit zurückgeschraubt, dass die Fortsätze 5, 6 und 7 freikommen. Anschliessend kann der zylinderförmige Abschnitt 20 des Gehäuses 4 gegen die Wirkung der Rastverbindung zwischen dem Wulst 23 und der Nut 16 aus dem Rastglied 4a herausgezogen werden. Falls es notwendig ist, auch das Rastglied 4a aus der Schalttafel 2 zu entfernen, kann dies nunmehr einfach dadurch erfolgen, dass die drei Fortsätze 5, 6 und 7 entsprechend von Hand zusammengedrückt und durch das Loch 1 der Schalttafel 2 hindurchgeschoben werden.

Unter bestimmten Umständen, beispielsweise wenn, wie in Fig. 1 veranschaulicht, in dem Schalttafeleinbaugerät 3 ein Leuchtenteil oder eine Anzeigeeinrichtung 30 steckt, kann es zweckmässig sein, zu dieser auch bei montiertem Schalttafeleinbaugerät 3 Zugang zu haben. Dies wird dadurch erreicht, dass in dem Rastglied 4a ein Innengewinde 31 vorgesehen ist, in dem eine beispielsweise glasklare Abdeckhaube 32 mit einem entsprechenden Gewinde eingeschraubt ist.

Um beispielsweise die Dichtigkeitsforderung nach IP 54 zu erfüllen, kann zwischen dem Rastglied 4a und der Schalttafel 2 eine Dichtung 33 liegen. Ferner kann auf wenigstens einem der Fortsätze 5, 6 und 7 in dem Bereich zwischen der sägezahnförmigen Rippe 14 und dem hohlzylindrischen Abschnitt des Rastgliedes 4a eine sich in axialer Richtung erstreckende schmale Führungsleiste ausgebildet sein, die in eine entsprechende Ausnehmung am Rand des Loches 1 der Schalttafel 2 eingreift und somit ein Verdrehen des Rastgliedes 4a in dem Loch 1 verhindert.

Das Schalttafeleinbaugerät 3 ist insbesondere im explosionsgefährdeten Bereich vorteilhaft einsetzbar, da mit dem Gehäuse 4 ein Anschlusskabel fest verbunden sein kann, das nicht von vorne her durch das Loch 1 in der Schalttafel 2 eingeführt werden muss. Ausserdem ergibt sich durch die Überwurfmutter 25 eine grossflächige Befestigung an der Schalttafel, so dass in dem Gehäuse 4 auch ohne weiteres relativ schwere elektrische Schaltelemente wie kleine Transformatoren oder ähnliches untergebracht werden können.

Je nach Anwendungszweck kann das Gehäuse 4, das Rastglied 4a und die Überwurfmutter 25 aus Kunststoff oder aber auch aus Metall gefertigt sein.

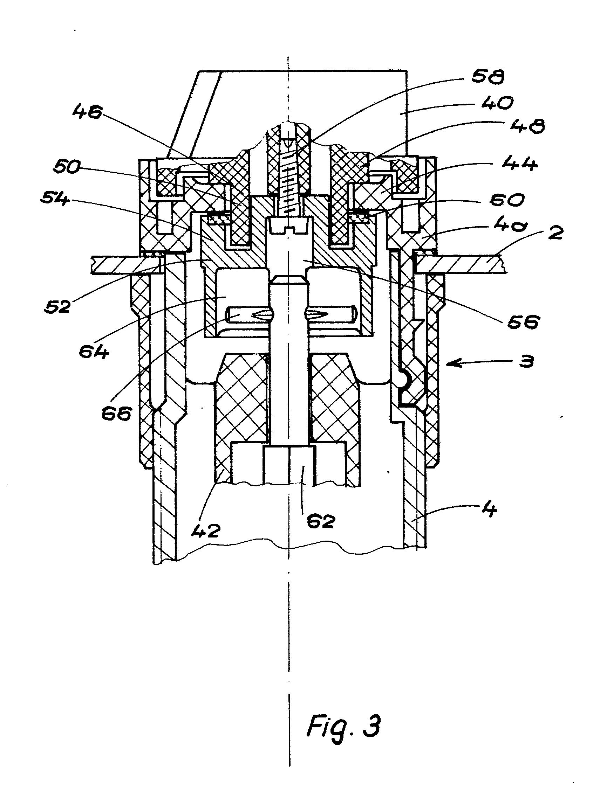

In Fig. 3 ist aussschnittsweise ein weiteres Ausführungsbeispiel eines Schalttafeleinbaugerätes 3 veranschaulicht, bei dem gleiche Bezugszeichen gleiche Gegenstände wie bei dem Ausführungsbeispiel nach den Fig. 1 und 2 kennzeichnen.

Im Gegensatz zu dem ersten Ausführungsbeispiel enthält das Schalttafelbaugerät 3 nach Fig. 3 in dem zugehörigen Rastglied 4a ein Betätigungsorgan 40 in Form eines Knebelknopfes für ein in dem Gehäuse 4 angeordnetes und nicht weiter dargestelltes elektromechanisches Gerät 42, wie einen Schalter, einen Drehwiderstand, einen Drehmelder oder dgl. Zu diesem Zweck enthält das Rastglied 4a einen radial nach innen zeigenden, konzentrisch angeordneten Bund 44, der eine Lagerfläche für den Knebelknopf 40 bildet.

An den Knebelknopf 40 ist ein konzentrischer, zylinderförmiger Fortsatz 46 angeformt, der teilweise durch den Bund 44 des Rastgliedes 4a hindurchreicht und mit einer an dem Fortsatz 46 ausgebildeten ringförmigen Schulter 48 auf dem Bund 44 aufliegt. Die Anordnung ist hierbei so getroffen, dass der zylinderförmige Fortsatz 46 in dem Bereich des Bundes 44 deutlich kleiner ist als die von dem Bund 44 freigelassene Öffnung, so dass ein seitliches Ausweichen des Knebelknopfes 40 möglich ist.

In dem zylinderförmigen Fortsatz 46 ist ein Innensechskant ausgebildet, der einen entsprechenden Aussensechskant 50 eines Längenausgleichsgliedes 52 aufnimmt, das auf diese Weise mit dem Knebelknopf 40 drehfest gekuppelt ist. Das Längenausgleichsglied 52 ist ebenfalls im wesentlichen rotationssymmetrisch ausgebildet und trägt an der Stirnfläche, an der der Aussensechskant 50 angeformt ist, einen hierzu konzentrisch angeordneten Ansatz 54, der mit dem Aussensechskant 50 einen den zylinderförmigen Fortsatz 46 aufnehmenden Ringspalt begrenzt. Zur Befestigung des Längenausgleichsgliedes 52 an dem Knebelknopf 40 sitzt in einer in dem Längenausgleichsglied 52 angebrachten Stufenbohrung 56 eine Schraube 58, die in einen entsprechenden ausgebohrten Fortsatz des Knebelknopfes 40 eingedreht ist. Auf diese Weise ist das Längenausgleichsglied 52 mit dem Knebelknopf 40 verbunden, wobei die Drehmomentübertragung zwischen den beiden Bauelementen über den Innensechskant in dem Fortsatz 46 und den Aussensechskant 50 erfolgt.

Damit für die Gesamtanordnung die Schutzbedingungen nach IP 54 erfüllt sind, und durch den Spalt zwischen den Fortsatz 46 und den Bund 44 kein Staub- oder Spritzwasser eindringen kann, liegt zwischen dem Bund 44 und dem ringförmigen Ansatz 54 des Längenausgleichsgliedes 52 eine elastische Dichtung 60, die durch das Festschrauben des Längenausgleichsgliedes 52 an dem Knebelknopf 40 festgespannt ist.

Zur Drehmomentübertragung zwischen dem Längenausgleichsglied 52 und der Welle 62 des elektromechanischen Bauelementes 42 ist an der Unterseite des Längenausgleichsgliedes 52 eine schraubenschlitzähnliche, tiefe Ausnehmung 64 ausgebildet, die einen in einer Querbohrung der Welle 62 sitzenden Stift 66 aufnimmt, während der zugehörige Abschnitt der Welle 62 in der Stufenbohrung 56 steckt.

Da die Ausnehmung 64 verhältnismässig tief ist, ist sichergestellt, dass auch bei Fertigungstoleranzen eine spannungsfreie Kupplung zwischen der Welle 62 und dem Knebelknopf 40 besteht, die nicht etwa bestrebt wäre, das Rastglied 4a von dem Gehäuse 4 abzudrücken.

Die Montage erfolgt auch bei diesem Ausführungsbeispiel des Schalttafeleinbaugerätes 3 wie bei dem Ausführungsbeispiel nach den Fig. 1 und 2.

**Patentansprüche**

1. Schalttafeleinbaugerät (3) zur Einlochmontage in Schalttafeln (2), insbesondere für explosionsgeschützte elektrische Betriebsmittel, mit einem elektrische Schalt- oder Anzeigeeinrichtungen (42, 30) aufnehmenden Gehäuse (4), das an seinem der Rückseite der Schalttafel (2) zugewandten Ende ein Aussengewinde (24) mit einer darauf sitzenden Überwurfmutter (25) sowie einer Rasteinrichtung (23) auf seiner Aussenfläche (20) aufweist, mit einem mit dem Gehäuse (4) verbindbaren Rastglied (4a), an dessen der Vorderseite der Schalttafel (2) zugewandter Stirnseite mehrere sich im wesentlichen in axialer Richtung erstreckende, auf einem Kreis angeordnete Fortsätze (5, 6, 7) hervorstehen, die im montierten Zustand durch ein Loch in der Schalttafel (2) hindurchragen und auf ihrer Innenseite (8, 9, 10) an ihrem der Stirnseite abgewandten Ende eine Rasteinrichtung (16) tragen, die mit der entsprechend ausgebildeten Rasteinrichtung (23) auf der Aussenseite des Gehäuses (4) zusammenpasst, wobei im montierten Zustand das Gehäuse (4) von den freien Enden der Fortsätze (5, 6, 7) her bis zum Einschnappen der Rasteinrichtungen (16, 23) zwischen die Fortsätze (5, 6, 7) eingeführt ist und die die Fortsätze (5, 6, 7) übergreifende und die Rasteinrichtungen (16, 23) sichernde Überwurfmutter (25) gegen die Rückseite der Schalttafel (2) festgeschraubt ist, dadurch gekennzeichnet, dass die Fortsätze (5, 6, 7) auf ihrer Aussenfläche (11, 12, 13) eine längs dem Umfang und im Abstand zu der Stirnseite verlaufende Rippe (14) tragen, die ein sägezahnförmiges Querschnittsprofil aufweist, dessen steile Kante der Schalttafel (2) zugekehrt ist.

2. Schalttafeleinbaugerät nach Anspruch 1, dadurch gekennzeichnet, dass die Innenfläche (8, 9, 10) der Fortsätze (5, 6, 7) auf einem Zylindermantel liegen und das Gehäuse (4) im Bereich der Fortsätze (5, 6, 7) einen zylindrischen Abschnitt (20) mit in axialer Richtung verlaufenden Führungsleisten (21, 22) aufweist, die in die Lücken zwischen den Fortsätzen (5, 6, 7) passen.

3. Schalttafeleinbaugerät nach Anspruch 1, dadurch gekennzeichnet, dass die Rasteinrichtung (16, 23) der Fortsätze (5, 6, 7) durch eine längs dem Umfang verlaufende Nut (16) gebildet ist, in die ein längs dem Umfang verlaufender, auf dem zylindrischen Abschnitt (20) des Gehäuses (4) angeordneter Wulst (23) einrastbar ist.

4. Schalttafeleinbaugerät nach Anspruch 1, dadurch gekennzeichnet, dass die Überwurfmutter (25) auf einem hinter der Rasteinrichtung (16, 23) angeordneten Gewinde (24) sitzt und in einem vorderen Bereich einen gewindelosen Abschnitt mit einem Innendurchmesser aufweist, der dem Aussendurchmesser der Fortsätze (5, 6, 7) im Bereich der Rasteinrichtung (16) und dem von der sägezahnförmigen Rippe (14) festgelegten Aussendurchmesser entspricht.

5. Schalttafeleinbaugerät nach Anspruch 1, dadurch gekennzeichnet, dass das Rastglied (4a) eine Verdrehsicherung trägt.

6. Schalttafeleinbaugerät nach Anspruch 5, dadurch gekennzeichnet, dass die Verdrehsicherung durch eine auf einem Fortsatz (5, 6, 7) angeordnete, in axialer Richtung verlaufende Führungsleiste gebildet ist.

7. Schalttafeleinbaugerät nach Anspruch 1, dadurch gekennzeichnet, dass die Abstände der Fortsätze (5, 6, 7) untereinander jeweils gleich sind.

8. Schalttafeleinbaugerät nach Anspruch 1, dadurch gekennzeichnet, dass wenigstens eine der Lücken zwischen zwei benachbarten Fortsätzen eine andere Breite als die übrigen Lücken aufweist, an die die Breite einer der Führungsleisten (21, 22) auf dem zylindrischen Abschnitt (20) angepasst ist.

9. Schalttafeleinbaugerät nach Anspruch 1, dadurch gekennzeichnet, dass das Rastglied (4a) ein Innengewinde (31) trägt, in das eine Abdeckhaube (32) einschraubbar ist.

10. Schalttafeleinbaugerät nach Anspruch 1, dadurch gekennzeichnet, dass in dem Rastglied (4a) ein Betätigungsorgan (40) für das elektrische Betriebsmittel (42) gelagert ist.

**Claims**

1. Switchboard insert device (3) for single-hole mounting in switchboards (2), in particular for explosion-proof electrical operating elements, comprising a casing (4) accommodating electrical switch or indicator means (42, 30) and having an end disposed towards the rear side of the switchboard (2), which end being provided with an external thread (24), a cap screw screwed thereon and catch means (23) on its exterior surface (20); and a snap-in member (4a), connectable with said casing (4) and having a front end facing the front side of the switchboard (2), from which front end a plurality of annularly disposed extensions projecting through a hole in the switchboard (2) are protruding in substantially axial direction when the switchboard insert device (3) is mounted therein, said extensions (5, 6, 7) including catch means (16) on their interior surfaces (8, 9, 10) at their ends remote from the front end of the snap-in member (4a) which catch means (16) mate with the correspondingly designed catch means (23) on the exterior surface of the casing (4), whereby when the switchboard insert device (3) is mounted in the switchboard (2), the casing (4) is inserted between the free ends of the extensions (5, 6, 7) until the catch means (16, 23) come into engagement and the cap screw (25) overlapping the extensions (5, 6, 7) and securing the catch means (16, 23) is screwed down against the rear side of the switchboard (2), characterized in that on their exterior surfaces (11, 12, 13) the extensions (5, 6, 7) are provided with a rib (14) spaced apart from the front end and extending circumferentially, said rib (14) comprising a saw-tooth-shaped cross section the steep edge of which faces the switchboard (2).

2. Switchboard insert device according to claim 1, characterized in that the interior surfaces (8, 9, 10) of the extensions (5, 6, 7) lie on the imaginary surface of a cylinder and in that the casing (4) comprises in the region of the extensions (5, 6, 7) a cylindrical section (20) including guide members (21, 22), that extend in axial direction and fit into the gaps between the extensions (5, 6, 7).

3. Switchboard insert device according to claim 1, characterized in that the catch means (16, 23) of the extensions (5, 6, 7) is formed by a circumferentially extending groove (16) with which a projecting edge (23) that extends circumferentially and is provided on the cylindrical section (20) of the casing (4) can be engaged.

4. Switchboards insert device according to claim 1, characterized in that the cap nut (25) is mounted on a thread (24) located behind the catch means (16, 23) and includes in an anterior region a threadless section having an internal diameter that corresponds to the external diameter of the extensions (5, 6, 7) in the area of the catch means (16) and to the external diameter determined by the saw-tooth-shaped rib (14).

5. Switchboard insert device according to claim 1, characterized in that the snap-in member (4a) is provided with a rotation prohibiting means.

6. Switchboard insert device according to claim 5, characterized in that the rotation prohibiting means is provided by an axially extending guide member that is arranged on an extension (5, 6, 7).

7. Switchboard insert device according to claim 1, characterized in that the extensions (5, 6, 7) are equally spaced from each other.

8. Switchboard insert device according to claim 1, characterized in that at least one of the gaps between two adjacent extensions differs in width from the other gaps to which widths the width of one of the guide members (21, 22) on the cylindrical section (20) is adapted.

9. Switchboard insert device according to claim 1, characterized in that the snap-in member (4a) is provided with an internal thread (31) into which a covering cap (32) can be screwed.

10. Switchboard insert device according to claim 1, characterized in that an actuating means (40) for the electrical operating element (42) is mounted in the snap-in member (4a).

**Revendications**

1. Appareil d'encastrement (3) pour le montage dans un trou pratiqué dans des tableaux de distribution (2), en particulier pour outillages industriels électriques anti-déflagrants, muni d'un boîtier (4) qui reçoit des dispositifs (42, 30) de commande ou de signalisation électriques et qui, à son extrémité tournée du côté 1 de la face arrière du tableau de distribution (2), comporte un filetage (24) avec un écrou-raccord (25) placé dessus ainsi qu'un dispositif d'encliquetage (23) sur sa surface externe (20), d'un organe d'encliquetage (4a) pouvant être raccordé au boîtier (4) et sur la face frontale duquel, tournée vers la face avant du tableau de distribution, font saillie plusieurs appendices (5, 6, 7) qui, s'étendant sensiblement dans le sens axial et disposés sur un cercle, traversent à l'état monté un trou du tableau de distribution (2) et portent sur leur face interne (8, 9, 10), à leur extrémité opposée à la face frontale, un dispositif d'encliquetage (16) qui coopère avec le dispositif d'encliquetage (23) réalisé de façon correspondante sur la face externe du boîtier (4), le boîtier (4), à l'état monté, étant engagé entre les appendices (5, 6, 7) depuis les extrémités libres de ces appendices (5, 6, 7) jusqu'à l'enclenchement des dispositifs d'encliquetage (16, 23), et l'écrou-raccord recouvrant les appendices (5, 6, 7) et maintenant les dispositifs d'encliquetage (16, 23), étant serré contre la face arrière du tableau de distribution (2), caractérisé par le fait que les appendices (5, 6, 7) portent sur leurs surfaces externes (11, 12, 13) une nervure (14) qui est disposée sur la périphérie et à distance de la face frontale et présente un profil de section transversale en forme de dent de scie dont l'arête à pente raide est tournée du côté du tableau de distribution (2).

2. Appareil d'encastrement pour tableaux de distribution selon la revendication 1, caractérisé par le fait que les surfaces internes (8, 9, 10) des appendices (5, 6, 7) sont situées sur une surface cylindrique et que le boîtier (4) dans la zone des appendices (5, 6, 7) comporte une section cylindrique (20) avec barrettes de guidage (21, 22) disposées dans le sens axial et s'engageant dans les creux entre les appendices (5, 6, 7).

3. Appareil d'encastrement pour tableaux de distribution selon la revendication 1, caractérisé par le fait que le dispositif d'encliquetage (16, 23) des appendices (5, 6, 7) est formé par une rainure (16) qui est disposée le long de la périphérie et dans laquelle peut s'encliqueter un bourrelet (23) placé sur la section cylindrique (20) du boîtier (4) et disposé le long de la périphérie.

4. Appareil d'encastrement pour tableaux de distribution selon la revendication 1, caractérisé par le fait que l'écrou-raccord (25) repose sur un filetage (24) aménagé derrière le dispositif d'encliquetage (16, 23) et comporte dans une zone antérieure une section sans filetage ayant un diamètre intérieur qui correspond au diamètre extérieur des appendices (5, 6, 7) dans la zone du dispositif d'encliquetage (16) et au diamètre extérieur déterminé par la nervure (14) en forme de dent de scie.

5. Appareil d'encastrement pour tableaux de distribution selon la revendication 1, caractérisé par le fait que l'organe d'encliquetage (4a) comporte un dispositif de blocage en rotation.

6. Appareil d'encastrement pour tableaux de distribution selon la revendication 5, caractérisé par le fait que le dispositif de blocage en rotation est formé par une barrette de guidage placée sur un appendice (5, 6, 7) et disposée dans le sens axial.

7. Appareil d'encastrement pour tableaux de distribution selon la revendication 1, caractérisé par le fait que les distances des appendices (5, 6, 7) les unes par rapport aux autres sont respectivement égales.

8. Appareil d'encastrement pour tableaux de distribution selon la revendication 1, caractérisé

**0 037 896**

par le fait qu'au moins l'un des creux entre deux appendices voisins présente une autre largeur que les autres creux, à laquelle est adaptée la largeur d'une des barrettes de guidage (21, 22) sur la section cylindrique (20).

9. Appareil d'encastrement pour tableaux de distribution selon la revendication 1, caractérisé par le fait que l'organe d'encliquetage (4a) porte un taraudage (31) dans lequel un capot de recoüvrement (32) peut être vissé.

10. Appareil d'encastrement pour tableaux de distribution selon la revendication 1, caractérisé par le fait que dans l'organe d'encliquetage (4a) est monté un organe d'actionnement (40) pour l'outillage électrique (42).

*Fig. 1*

Fig. 2

Fig. 3